# EUROPEAN PATENT APPLICATION

(11) **EP 3 081 353 A2**
(43) Date of publication of application: **19.10.2016**
(21) Application number: 16164449.7
(22) Date of filing: 08.04.2016
(51) Int. Cl.: B26D 1/02, B26D 1/45, B26F 3/08, B26D 7/00

(54) **PROCESS AND DEVICE FOR TRIMMING THE EDGES OF STRIP MATERIALS CONTAINING REINFORCING FIBRES**

(30) Priority: 15.04.2015 SK 500332015 U
(71) Applicant: Konstrukta Industry, a.s, 912 50 Trencin (SK)
(72) Inventor: Mjartan, Peter, 91105 Trencín (SK)

(57) **Abstract**

The invention describes the process of trimming the edges of strip materials containing the reinforcing fibres in form of inner insert, by cutting off the edge part (10) of strip material by a trimming device (6) fixed to a holding (2) device, mounted on a moving (1) member, while the holding unit consisting of vertically (3) and horizontally (4) arranged arms, which according to side deflection of trimming device, perform a sliding motion transversely to the direction of the movement of the strip material, while, by means of the relative arrangement of arms, it guarantees the constant angle of the trimming device position relative to the plane of trimmed strip material at the place of cutting.

## Description

### BACKGROUND OF THE INVENTION

### Field of the Invention

The invention related to the process of trimming the edges of strip materials containing the reinforcing fibres in form of inner insert, mainly inserts from nylon, textile and steelcord. The edge trimming means the cutting off edge part of strip material. In rubber technology the edge trimming is provided by trimming device, preferable by heating knife reached to strip material between reinforced fibres embedded parallel to direction of movement of strip material as well as longitudinal to trimming device (in direction of the cutting). The trimming device is fastened in holding unit and moveable in longitudinal direction of strip material movement to adapt its position to deflections of reinforced fibred movement and thereby avoid the exposure of coated material, eventually their damage or break.

### Description of the Related Art

Usual ways of trimming the edges of strip materials containing the reinforcing fibres are realized at machinery containing the trimming device (knife) fastened in holding unit and they are anchored either steady in one point, immovably against to side change of direction of track of strip material as well as reinforced fibre, or placed in one rotary point, while the change of position of device is realized from sensing of oblique deflection of arm placed in one rotary point, when at reaching of particular angle of tilting the trimming device it realizes to side movement of device against to direction of strip material movement.

These devices are described in EP 1327507, DE 10201157, DE 3608194 A1 and DE 4411937 C1.

### SUMMARY OF THE INVENTION

The invention eliminates the disadvantages of upper mentioned solutions where in resolving the change position device by tilting from one rotary point, the side tilting of reinforced fiber causes that the trimming device (knife) is not constantly placed parallel to direction of reinforced fibers movement and it changes angle position due to plane of strip material and thereby trimming conditions are changed and it is not realized the ideal and steady trimming of material over the thickness of the strip material due to near reinforced fiber and it causes the exposure of fibers.

The invention eliminates the mentioned disadvantages by placing of trimming device to the side sliding holding unit divided from arms, horizontally and vertically, to each other joint by rotary points being made the pendulum movement during the constant angle position of horizontal arm to the plane of strip material thereby also the trimming device.

When side tilting of strip material, trimming device is moved while holding unit by trimming device does not make the pendulum movement by one rotary point causing the oblique tilting of trimming device against to plane of direction of strip material motion, but it makes the sliding movement being perpendicular to the direction of strip material movement sensed by sensing elements and it causes side movement of this holding unit.

### BRIEF DESCRIPTION OF THE DRAWINGS

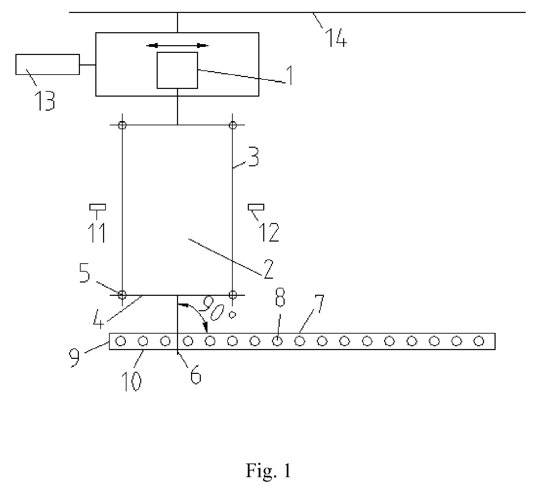

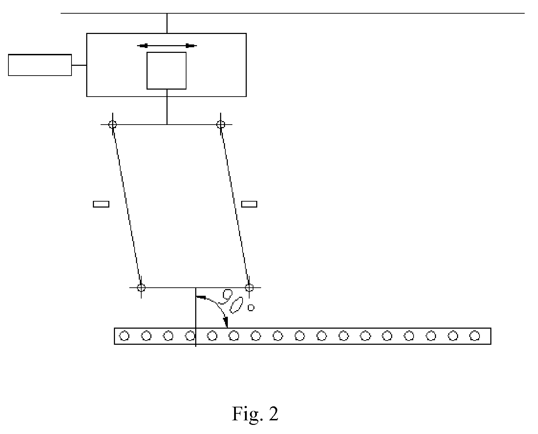

In the drawing in fig.1 is described the edge trimming device.
In the drawing in fig.2 is described the edge trimming device.

### DETAILED DESCRIPTION OF THE INVENTION

The edge trimming device (Fig.1) consisting of moving member **1** with fixed holding **2** device comprising of two vertically arranged arms **3** and two horizontally arranged arms **4**, while vertically and horizontally arms are each other jointed in rotary **5** points. At holding unit it is mounted the trimming device **6**, preferably heating knife. Strip material **7** containing the reinforced fibers **8** mainly from nylon or steelcord making the reinforced insert, during the forward movement it signalizes side deflections causing the tilting of its side edge **9** in area **10** which should be trimmed. The side deflection of edge causes the tilting of trimming device as well as arms of holding unit, while horizontal arms of holding unit do not change their angle position to the plane of strip material and therefore the trimming device has not any angle tilting neither horizontal nor vertical plane of direction of strip material track (fig. 2). The angle tilting of vertical arms of holding unit causes the approach of arm to sensors **11, 12** each on the one side of holding unit. In case of the approach to sensors reaches in advance states value, the drive unit **13** is started and controlled the movement of moving member rights or lefts according to the approach to sensor **11** or **12.** The setting of sensors is preferably arranged to the tilting of holding unit not reach the end positions and to not cause the exposure of reinforced fibers.

It is possible to set the whole holding **2** device with moving **1** member manually or by drive unit intended for it along guiding **14** around the range of strip material width.

The trimming device **6** is able during the movement of strip material to be inserted to the cutting by moving member which during the stop of strip material movement receives the signal from central control unit about the stop of movement and extends the trimming device **6** to non-operating position when the trimming device is placed out of trimmed strip material, and thereby it avoids the possible damage of trimmed material by heat emitted by heating trimming device (in case of device is heated).

Behind the trimming device in direction of track of strip material it is necessary to arrange the separating element to ensure the gap between the trimmed edge and the remaining strip material to avoid its relative sticking after the trimming, during the movement of strip material in direction to place of removal or winding up the trimmed edge.

## Claims

1. The process of trimming the edges of strip materials containing the reinforcing fibres in form of inner insert, mainly inserts from nylon, textile and steelcord, by cutting off the edge part (10) of strip material (7) by trimming device (6) which reaches in operating position to area between reinforced fibres (8) of inner insert of strip material, which are arranged parallel to direction of material motion, identical to direction of trimming, and it is fixed to holding (2) device, mounted on moving (1) member moved transversely to the direction of movement of strip material track, containing the sensing (11,12) of side deflection of holding unit, where output sensing signal of side deflection of holding unit after the exceeding a predetermined value of side deflection it causes the request for movement of moveable member to the direction of deflection **characterized b y** the holding unit consisting of vertically (3) and horizontally (4) arranged arms while the arms are jointed together in rotary points (5), and when side deflection of trimming device being fastened in one of horizontal arms of holding unit, the holding unit performs the cross sliding motion to the direction of strip material movement, while by relative arrangement of arms it guarantees the constant angle of trimming device position to plane of trimming strip material at place of cutting.

2. Device for providing the process according to claim 1 **characterized by** the holding unit is preferably arranged on moveable holder with sensors of side deflection of holding unit and it is manually or by servomotor moved transversely to the direction of strip material motion, in full width of strip material independently of holder movement.

3. Device for providing the process according to claim 1 **characterized by** behind the trimming device in direction of strip material motion is arranged the separating element, preferable steel needle, avoiding the sticking the trimmed edge back to the remaining strip material during the movement of strip material in direction to place of removal the trimmed edge or winding up the trimmed edges to coil.

4. Device for providing the process according to claim 1 **characterized by** the trimming device is preferably heated and arranged together with moving member, preferably by pneumatic cylinder which provides the ejection of trimming device to the position out of strip material when strip material motion is stopped.
